# EUROPEAN PATENT APPLICATION

(11) **EP 4 674 675 A1**
(43) Date of publication of application: **07.01.2026**
(21) Application number: 25184454.4
(22) Date of filing: 23.06.2025
(51) Int. Cl.: B60L 53/16, B60L 53/66

(54) **BATTERY CHARGING**

(30) Priority: 01.07.2024 GB 202409497
(71) Applicant: Fortescue Zero Limited, Kidlington, England OX5 1GB (GB)
(72) Inventor: Chapeau, Sebastien, Kidlington, OX5 1GB (GB); Dolinsek, Greg, Kidlington, OX5 1GB (GB)
(74) Representative: HGF

(57) **Abstract**

Disclosed is an electrical charger connector (3) comprising a charger plug (17) having connection pins (81) comprising first (87) and second (89) communication pins. The first and second communication pins are arranged to cooperatively engage respective first (31) and second (33) communication pin sockets of a charging socket (11), to thereby create connections for the sending and/or receiving of at least one communication signal between a charger control system (13) of an electrical charger (5) and a rechargeable energy store control system (9) of an electrically powered device (1). The first (31) and second (33) communication pin sockets correspond in position and form with respective alternating current, AC, pin sockets of a combined charging system, CCS, socket.

## Description

### TECHNICAL FIELD

The present disclosure relates to battery charging. Aspects of the invention relate to an electrical charger connector, an electrical charger, an electrical charging connector and an electrically powered device.

### BACKGROUND

Combined charging system, CCS, sockets are a known and ubiquitous standard for charging connections. They come in two forms, CCS1 for use in countries including those in North America and CCS2 for use in countries including those in Europe. Both versions offer pin sockets for both AC and DC charging. In addition, pin sockets are provided for related functionality including for power line communication (PLC) (e.g. to control a charging process) using a control pilot pin socket. PLC based communication is referenced to earth and uses pulse width modulation of an underlying signal to convey communication information. This system is however relatively slow to initialise and relatively unreliable. This can be problematic, especially in applications where for instance a rapid and reliable charging process is required (e.g. in motorsport).

It is an aim of the present invention to address one or more of the disadvantages associated with the prior art.

### SUMMARY OF THE INVENTION

According to a first aspect of the invention, there is provided an electrical charger connector comprising a charger plug having connection pins comprising first and second communication pins, the first and second communication pins being arranged to cooperatively engage respective first and second communication pin sockets of a charging socket, to thereby create connections for the sending and/or receiving of at least one communication signal between a charger control system of an electrical charger and a rechargeable energy store control system of an electrically powered device,
where the first and second communication pin sockets correspond in position and form with respective alternating current, AC, pin sockets of a combined charging system, CCS, socket.

Consequently, a charging socket may be used conforming in form with a CCS socket, but with at least some of the pin sockets that would conventionally be used as AC pin sockets, being substituted for communication use. Thus, a charging socket that is conventional in form (i.e. CCS) may have partially adjusted functionality.

The AC pin sockets might for instance be an L1 pin socket (AC line 1) and a neutral pin socket (e.g. in the case of a single phase AC style of CCS socket - CCS1), or might be any two from an L1, an L2, an L3 (AC lines 1, 2 and 3) and a neutral pin socket (e.g. in the case of a three phase AC style CCS socket - CCS2).

**The arranging** of the first and second communication pins to cooperatively engage respective first and second communication pin sockets may be in terms of their locations on the charger plug and/or their shape and/or their dimensions.

The correspondence between the first and second communication pin sockets and respective AC pin sockets of a CCS socket may be in terms of corresponding relative positioning and form (e.g. shape and dimensions).

AC pin sockets in a CCS socket may be redundant where electrical charging is being, or is to be performed via other pins sockets or other means. Using existing/conventional, but redundant pin sockets for communication may allow for communication with enhanced reliability by comparison with alternatives (such as power-line communication using a control pilot). Specifically, there may be reduced signal loss and/or improved electro-magnetic compatibility. Additionally or alternatively, a quicker start-up time for a charging process may occur, which may be beneficial especially where for instance performing bespoke charging protocols. Additionally or alternatively, unnecessary/undesirable protocol steps (e.g. payment authorisation and/or charger parameter discovery) associated with a conventional communication regime (i.e. one that would not use the first and second communication pins for communication) may be reduced or eliminated. Additionally or alternatively use of alternative charging protocols via the electrical charger connector may be facilitated e.g. "charge for moving" (CHAdeMO) protocols.

The first and second communication pins, first and second communication pin sockets and signal lines associated with those communication pins and sockets might for example be used for communication:
∘ From the rechargeable energy store control system to, set power limit exchange (max voltage and current) and/or to request/control lock engagement and/or indicate readiness for charging of the rechargeable energy store and/or setting target current and/or voltage e.g. for in-charge adjustments and/or request charging termination.
∘ From the charger control system to, provide charger status and/or indicate insulation status and/or indicate maximum current and/or voltage deliverable and/or indicate voltage and/or current being delivered.
In some embodiments the connection pins comprise positive and negative direct current, DC, pins arranged to cooperatively engage respective positive and negative DC pin sockets of the charging socket, to thereby make connections for the transmission of DC current for charging a rechargeable energy store of the electrically powered device.

The positive and negative DC pins may provide charging capability to complement communication functionality provided by the first and second communication pins.

The positive and negative DC pin sockets may correspond in position, form and function with DC pin sockets of the CCS socket.

Consequently, unconventionally, pins may therefore be present in pin sockets corresponding at least in position and form with CCS socket DC pin sockets and AC pin sockets, thereby making use of pin connection points which would conventionally be redundant/unused in a particular application.

The communication functionality may be used to coordinate charging via the positive and negative DC pins and corresponding positive and negative DC pin sockets.

The rechargeable energy store may for instance be a battery or battery assembly.
In some embodiments the connection pins comprise:
a protective earth, **PE,** pin;
a proximity pilot, PP, pin;
a control pilot, CP, pin; and
two further pins corresponding in position and form with respective AC pin sockets of the CCS socket.

One or more of these could be omitted, for instance the two further pins may not be present in the case of the CCS socket being of CCS1 form.

The two further pins may, in combination with the first and second communication pins, represent a set of pins corresponding in position and form with respective AC pin sockets of the CCS socket, in the case of the CCS socket being of CCS2 form. Consequently, the set of pins may correspond in position and form with L1, L2, L3 and N pin sockets of the CCS socket.

Each of the PE and PP pins may correspond in position, form and function respectively with PE and PP pin sockets of the CCS socket.

Consequently, the connection pins may correspond in all cases in position and form with those of the CCS standard (be that CCS1 or CCS2) and in some cases with position, form and function.

The PE pin and/or the PP pin may fulfil their normal functions according to the CCS standard.

The CP pin may fulfil some of its normal function according to the CCS standard and/or one or more alternative functions, e.g. as a control pin to determine when power delivery is permitted. The CP pin may not however carry power line communications (which may be performed by the first and second communication pins).

The further pins may be unconnected within the charger plug. They may therefore be considered dead and/or functionless (other than to cooperatively engage corresponding pin sockets of the charging socket and thereby to further assist in correct alignment and locating of the charger plug and charging socket when they are cooperatively engaged).

In some embodiments the connection pins are arranged in position and form to correspond to a combination of those of DC and AC CCS plugs.

Such an embodiment may be thought of as combining an AC CCS charger plug with a DC CCS charger plug. This may be unconventional because typically only an AC or DC CCS charger plug would be cooperatively engaged with the CCS socket (the relevant plug being selected in accordance with the charging capabilities of the electrical charger and/or the charging requirements of the electrically powered device (AC or DC). Consequently only a corresponding sub-set of pin sockets of the CCS socket would be engaged. In this case however, given the re-purposing of at least some of the pin sockets that would conventionally be used for AC current supply for charging, more/all of the pin sockets may be engaged.

The charger plug may be a single piece/single moulding. Additionally or alternatively, a body (e.g. a moulded body) of the charger plug may be arranged for cooperation with a CCS socket. It may for instance be that the charger plug has a mating feature such as an alignment rim of appropriate shape and dimensions for cooperative engagement with a mating feature such as an alignment groove of the CCS socket.

In some embodiments the charger plug comprises an electrically powered state of charge indicator.

An electrical circuit for powering the state of charge indicator may be formed in part by an electrical line of the electrical charger connector that would conventionally have been connected to one of the further pins (e.g. the further pin that would be conventionally arranged to cooperatively engage a neutral pin of the CCS socket). Such a connection may for instance be used as a high side driver for the state of charge indicator.

The state of charge indicator may be an LED, which might for instance be driven to vary in illumination pattern/characteristic in dependence on the state of charge of a rechargeable energy store of the electrically powered device.

In some embodiments the CCS socket is a CCS2 socket.

According to a second aspect of the invention there is provided an electrical charger arranged for use with an electrical charger connector, where
the electrical charger connector comprises a charger plug having connection pins comprising first and second communication pins, the first and second communication pins being arranged to cooperatively engage respective first and second communication pin sockets of a charging socket, to thereby create connections for the sending and/or receiving of at least one communication signal between a charger control system of an electrical charger and a rechargeable energy store control system of an electrically powered device, where
the first and second communication pin sockets correspond in position and form with respective alternating current, AC, pin sockets of a combined charging system, CCS, socket, and
the electrical charger comprises the charger control system, which is arranged to send the at least one communication signal to and/or receive the at least one communication signal from the rechargeable energy store control system of the electrically powered device via the connections respectively made by the first and second communication pins with the first and second communication pin sockets.

In some embodiments the electrical charger is arranged to deliver DC current to charge a rechargeable energy store of the electrically powered device via connections respectively made by positive and negative DC pins, which are connection pins of the charger plug, with positive and negative DC pin sockets of the charging socket.

In some embodiments, the electrical charger is arranged to deliver electrical power to a state of charge indicator of the charger plug under the control of the charger control system.

According to a third aspect of the invention there is provided an electrical charger comprising the electrical charger connector as previously described and where
the electrical charger comprises the charger control system, which is arranged to send the at least one communication signal to and/or receive the at least one communication signal from the rechargeable energy store control system of the electrically powered device via the connections respectively made by the first and second communication pins with the first and second communication pin sockets.

According to a fourth aspect of the invention there is provided an electrical charging connector comprising a charging socket having connection pin sockets comprising first and second communication pin sockets, the first and second communication pin sockets being arranged to cooperatively engage respective first and second communication pins of a charger plug, to thereby create connections for the sending and/or receiving of at least one communication signal between a charger control system of an electrical charger and a rechargeable energy store control system of an electrically powered device,
where the first and second communication pin sockets correspond in position and form with respective alternating current, AC, pin sockets of a combined charging system, CCS, socket.

The AC pin sockets might for instance be an L1 pin socket (AC line 1) and a neutral pin socket (e.g. in the case of a single phase AC style of CCS socket - CCS1), or might be any two from an L1, an L2, an L3 (AC lines 1, 2 and 3) and a neutral pin socket (e.g. in the case of a three phase AC style CCS socket - CCS2).

The arranging of the first and second communication pin sockets to cooperatively engage respective first and second communication pins may be in terms of their locations on the charging socket and/or their shape and/or their dimensions.

The correspondence between the first and second communication pin sockets and respective AC pin sockets of a CCS socket may be in terms of corresponding relative positioning and form (e.g. shape and dimensions).

The first and second communication pins, first and second communication pin sockets and signal lines associated with those communication pins and sockets might for example be used for communication:
∘ From the rechargeable energy store control system to, set power limit exchange (max voltage and current) and/or to request/control lock engagement and/or indicate readiness for charging of the rechargeable energy store and/or setting target current and/or voltage e.g. for in-charge adjustments and/or request charging termination.
∘ From the charger control system to, provide charger status and/or indicate insulation status and/or indicate maximum current and/or voltage deliverable and/or indicate voltage and/or current being delivered.

In some embodiments the connection pin sockets comprise positive and negative direct current, DC, pin sockets arranged to cooperatively engage respective positive and negative DC pins of the charger plug, to thereby create connections for the transmission of DC current for charging a rechargeable energy store of the electrically powered device.

The positive and negative DC pin sockets may provide charging capability to complement communication functionality provided by the first and second communication pin sockets.

The positive and negative DC pin sockets may correspond in position, form and function with DC pin sockets of the CCS socket.

Consequently, unconventionally, pins may therefore be present in pin sockets corresponding at least in position and form with CCS socket DC pin sockets and AC pin sockets, thereby making use of pin connection points which would conventionally be redundant/unused in a particular application.

The communication functionality may be used to coordinate charging via the positive and negative DC pin sockets and corresponding positive and negative DC pins.

The rechargeable energy store may for instance be a battery or battery assembly.

In some embodiments the connection pin sockets comprise:
a protective earth, PE, pin socket;
a proximity pilot, PP, pin socket;
a control pilot, CP, pin socket; and
two further pin sockets corresponding in position and form with respective AC pin sockets of the CCS socket.

One or more of these could be omitted, for instance the two further pin sockets may not be present in the case of the CCS socket being of CCS1 form.

The two further pin sockets may, in combination with the first and second communication pin sockets, represent a set of pin sockets corresponding in position and form with respective AC pin sockets of the CCS socket, in the case of the CCS socket being of CCS2 form. Consequently, the set of pin sockets may correspond in position and form with L1, L2, L3 and N pin sockets of the CCS socket.

Each of the PE and PP pin sockets may correspond in position, form and function respectively with PE and PP pin sockets of the CCS socket.

Consequently, the connection sockets may correspond in all cases in position and form with those of the CCS standard (be that CCS1 or CCS2) and in some cases with position, form and function.

The PE pin socket and/or the PP pin socket may fulfil their normal functions according to the CCS standard.

The CP pin socket may fulfil some of its normal function according to the CCS standard and/or one or more alternative functions, e.g. as a control pin socket to determine when power delivery is permitted. The CP pin socket may not however carry power line communications (which may be performed by the first and second communication pin sockets).

The further pin sockets may be unconnected within the charger plug. They may therefore be considered dead and/or functionless (other than to cooperatively engage corresponding pins of the charger plug and thereby to further assist in correct alignment and locating of the charging socket and charger plug when they are cooperatively engaged).

In some embodiments the connection pin sockets are arranged in position and form to correspond to a CCS socket.

A body (e.g. a moulded body) of the charging socket may be arranged for cooperation with a charger plug. It may for instance be that the charging socket has a mating feature such as an alignment groove of appropriate shape and dimensions for cooperative engagement with a mating feature such as an alignment rim of the charger plug.

In some embodiments the CCS socket is a CCS2 socket.

According to a fifth aspect of the invention there is provided an electrically powered device comprising a rechargeable energy store, a rechargeable energy store control system and the electrical charging connector previously described.

In some embodiments the electrically powered device is a vehicle and the rechargeable energy store is a traction battery of the vehicle.

The vehicle may be an electrically powered race car.

In some embodiments the vehicle comprises first and second communication interfaces arranged to form at least part of respective connections between the first and second communication pin sockets and the rechargeable energy store control system, where the first and second communication interfaces conform with the controller area network, CAN, vehicle bus standard.

It may be for instance that the first communication interface provides CAN LO and the second communication interface provides CAN HI.

### BRIEF DESCRIPTION OF THE DRAWINGS

One or more embodiments of the invention will now be described, by way of example only, with reference to the accompanying drawings, in which:
**Figure 1** shows a schematic view of an electrically powered device, an electrical charger and an electrical charger connector according to an embodiment of the invention;
**Figure 2** shows a perspective view of a charging socket in accordance with an embodiment of the invention;
**Figure 3** shows a perspective view of a charger plug in accordance with an embodiment of the invention; and
**Figure 4** shows a schematic view of an electrical charger connector, a charging socket and a link socket according to an embodiment of the invention.

### DETAILED DESCRIPTION

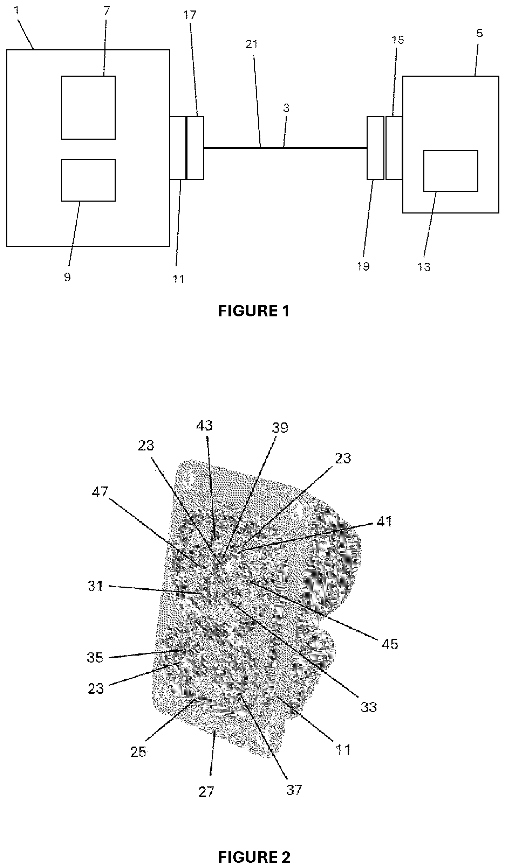

Referring first to Figure 1, an electrically powered device (in this case an electrically powered race car 1), is electrically connected by an electrical charger connector 3 to an electrical charger 5. The car 1 has a rechargeable energy store, in this case a traction battery 7 and a rechargeable energy store control system 9. The car 1 also has an electrical charging connector, in this case a charging socket 11. The electrical charger 5 has a charger control system 13 and a link socket 15. The electrical charger connector 3 has a charger plug 17, a link plug 19 and a connecting cable 21 housing various electrical lines/connections between the charger plug 17 and the link plug 19. Although as described here the electrical charger connector 3 can be disconnected from the electrical charger 5 via the link socket 15 and the link plug 19, in other embodiments the link socket 15 and link plug 19 may be omitted and the electrical charger connector 3 may be part of the electrical charger 5 (e.g. with direct connections to relevant components within the electrical charger 5 as described below). In this case, the electrical charger connector 3 may for instance enter a body of the electrical charger 5 via a gland.

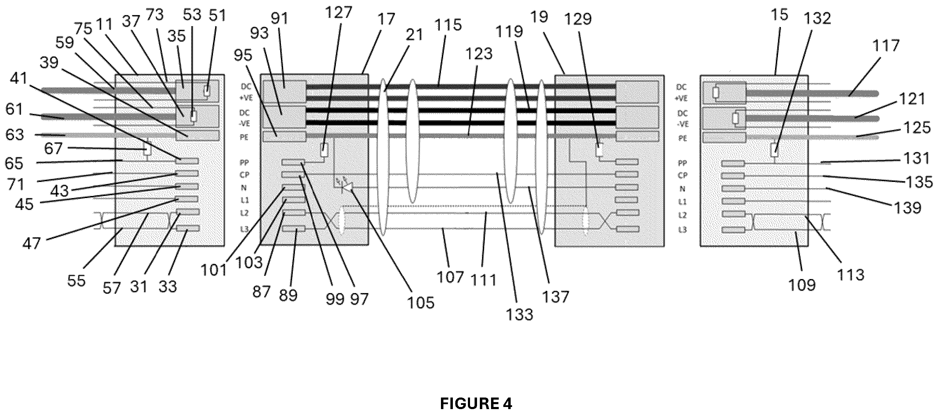

Referring now to Figures 2 and 4, the charging socket 11 is described in more detail. The charging socket 11 is in this case a CCS socket (specifically a CCS2 socket) in terms of its form. The charging socket 11 has nine connection pin sockets 23 (only some labelled in Figure 2 for clarity) and a mating feature. The mating feature is in this case an alignment groove 25, defined by its single piece moulded body 27. The alignment groove 25 is the same as a corresponding feature on a CCS2 socket. The connection pin sockets 23 are as follows:
- A first communication pin socket 31 corresponding in position and form with an AC line 2 (L2) pin socket of a CCS2 socket;
- A second communication pin socket 33 corresponding in position and form with an AC line 3 (L3) pin socket of a CCS2 socket;
- A positive DC pin socket 35 corresponding in position, form and function with a positive DC pin socket of a CCS2 socket.
- A negative DC pin socket 37 corresponding in position, form and function with a negative DC pin socket of a CCS2 socket.
- A protective earth, PE, pin socket 39 corresponding in position, form and function with a PE pin socket of a CCS2 socket.
- A proximity pilot, PP, pin socket 41 corresponding in position, form and function with a PP pin socket of a CCS2 socket.
- A control pilot, CP, pin socket 43 corresponding in position and form with a CP pin socket of a CCS2 socket.
- A first further pin socket 45 corresponding in position and form with an AC line 1 (L1) pin socket of a CCS2 socket.
- A second further pin socket 47 corresponding in position and form with a neutral (N) pin socket, of a CCS2 socket.

The charging socket 11 also has a first temperature sensor 51 and a second temperature sensor 53 respectively arranged to monitor the temperature of the positive DC pin socket 35 and the negative DC pin socket 37.

Electrically connecting the first communication pin socket 31 with a first communication interface of the rechargeable energy store control system 9 is a first CAN_LO line 55. Electrically connecting the second communication pin socket 33 with a second communication interface of the rechargeable energy store control system 9 is a first CAN_HI line 57. The first and second communication interfaces conform with the controller area network, CAN, vehicle bus standard.

Electrically connecting the positive DC pin socket 35 and a positive terminal of the traction battery 7 is a first positive DC conductor; (which may for instance be a busbar). Electrically connecting the negative DC pin socket 37 and a negative terminal of the traction battery 7 is a first negative DC conductor 61 (which may for instance be a busbar).

Electrically connecting the PE pin socket 39 and a grounding point on the car 1 is a first PE conductor 63.

Electrically connecting the PP pin socket 41 and a PP input of the rechargeable energy store control system 9 is a first PP line 65.

A first resistor 67 is also provided inside the charging socket 11 electrically connecting the first PP line 65 and the first PE conductor 63.

Electrically connecting the CP pin socket 43 with a CP input of the rechargeable energy store control system 9 is a first CP line 71.

The first 45 and second 47 further pin sockets are not electrically connected within the charging socket 11.

Electrically connecting the first temperature sensor 51 with first temperature monitoring connections of the rechargeable energy store control system 9 is a first temperature monitoring circuit 73. Electrically connecting the second temperature sensor 53 with second temperature monitoring connections of the rechargeable energy store control system 9 is a second temperature monitoring circuit 75.

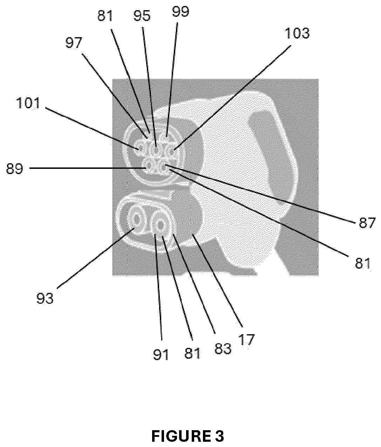

Referring now to Figures 3 and 4, the charger plug 17 is described in more detail. In form, the charger plug 17 corresponds to a combination of a DC CCS2 charger plug and an AC CCS2 charger plug. The charger plug has nine connection pins 81 (only some labelled in Figure 3 for clarity) and a mating feature, in this case an alignment rim 83, defined by its single piece moulded body 85. The alignment rim 83 corresponds to a combination of corresponding features on a DC CCS2 charger plug and an AC CCS2 charger plug. The alignment rim 83 is formed so as to correspond with and cooperatively engage with the alignment groove 25.

The connection pins 81 are as follows:
- A first communication pin 87 arranged to cooperatively engage the first communication pin socket 31. The first communication pin 87 corresponds in position and form with an AC line 2 (L2) pin of an AC CCS2 charger plug.
- A second communication pin 89 arranged to cooperatively engage the second communication pin socket 33. The second communication pin 89 corresponds in position and form with an AC line 3 (L3) pin of an AC CCS2 charger plug.
- A positive DC pin 91 arranged to cooperatively engage the positive DC pin socket 35. The corresponds in position, form and function with a positive DC pin of a DC CCS2 charger plug.
- A negative DC pin 93 arranged to cooperatively engage the negative DC pin socket 37. The negative DC pin 93 corresponds in position, form and function with a negative DC pin of a DC CCS2 charger plug;
- A PE pin 95 arranged to cooperatively engage with the PE pin socket 39. The PE pin 95 corresponds in position, form and function with a PE pin of an AC CCS2 charger plug.
- A PP pin 97 arranged to cooperatively engage with the PP pin socket. The PP pin 97 corresponds in position, form and function with a PP pin of an AC CCS2 charger plug.
- A CP pin 99 arranged to cooperatively engage with the CP pin socket 43. The CP pin 99 corresponds in position and form with a CP pin socket of an AC CCS2 charger plug.
- A first further pin 101 arranged to cooperatively engage with the first further pin socket 45. The first further pin 101 corresponds in position and form with an AC line 1 (L1) pin of an AC CCS2 charger plug.
- A second further pin 103 arranged to cooperatively engage with the second further pin socket 47. The second further pin 103 corresponds in position and form with a neutral (N) pin of an AC CCS2 charger plug.

The connection pins 81 corresponds in position and form with a combination of those of a DC CCS2 charger plug and an AC CCS2 charger plug.

The charger plug 17 also has an electrically powered state of charge indicator, in this case an LED 105.

Electrically connecting the first communication pin 87 with a third communication interface of the charger control system 13 is a second CAN_LO line 107 running through the cable 21 to the link plug 19, a third CAN_LO line 109 between the link socket 15 and the third communication interface and first cooperating mating features in the link plug 19 and link socket 15 to connect the second 107 and third 109 CAN_LO lines.

Electrically connecting the second communication pin 89 with a fourth communication interface of the charger control system 13 is a second CAN_HI line 111 running through the cable 21 to the link plug 19, a third CAN_HI line 113 between the link socket 15 and the fourth communication interface and second cooperating mating features in the link plug 19 and link socket 15 to connect the second 111 and third 113 CAN_HI lines.

The third and fourth communication interfaces conform with the controller area network, CAN, vehicle bus standard.

Electrically connecting the positive DC pin 91 and a positive DC supply terminal of the electrical charger 5 is a second positive DC conductor 115 running through the cable 21 to the link plug 19, a third positive DC conductor 117 between the link socket 15 and the positive DC supply terminal and third cooperating mating features in the link plug 19 and link socket 15 to connect the second 115 and third 117 positive DC conductors.

Electrically connecting the negative DC pin 93 and a negative DC supply terminal of the electrical charger 5 is a second negative DC conductor 119 running through the cable 21 to the link plug 19, a third negative DC conductor 121 between the link socket 15 and the negative DC supply terminal and fourth cooperating mating features in the link plug 19 and link socket 15 to connect the second 119 and third 121 negative DC conductors.

Electrically connecting the PE pin 95 and a grounding point on the electrical charger 5 is a second PE conductor 123 running through the cable 21 to the link plug 19, a third PE conductor 125 between the link socket 15 and the grounding point on the electrical charger 5 and fifth cooperating mating features in the link plug 19 and link socket 15 to connect the second 123 and third 125 PE conductors.

A second resistor 127 is provided in the charger plug 17 electrically connecting the PP pin 97 and the second PE conductor 123. Sixth cooperating mating features are provided in the link plug 19 and link socket 15 electrically connecting the second PE conductor 123, via a third resistor 129, with a second PP line 131 which is electrically connected with a PP input of the charger control system 13. In the link socket 15, a fourth resistor 132 connects the third PE conductor 125 with the second PP line 131.

Electrically connecting the CP pin 99 with a CP input of the charger control system 13 is a second CP line 133 running through the cable 21 to the link plug 19, a third CP line 135 between the link socket 15 and the CP input of the charger control system 13 and seventh cooperating mating features in the link plug 19 and link socket 15 to connect the second 133 and third 135 CP lines.

The first 101 and second 103 further pins are not electrically connected within the charger plug 17.

The LED 105 in the charger plug 17 has a first terminal connected to an LED driver terminal of the charger control system 13 by a first LED conductor 137 running through the cable 21 to the link plug 19, between the link socket 15 and the LED terminal of the charger control system 13 and eighth cooperating mating features in the link plug 19 and link socket 15 to connect the first 137 and second 139 LED conductors. The LED 105 also has a second terminal connected to the second PE conductor 123.

Although not described in detail here, in this embodiment, the first through seventh cooperating mating features are provided by connection pins in the case of the link plug 19 and complimentary connection pin sockets in the case of the link socket 15. Further, the connection pins of the link plug 19 correspond in position and form to a combination of those of a DC CCS2 charger plug and an AC CCS2 charger plug, and the connection pin sockets of the link socket 15 correspond in position and form to those of an AC CCS2 socket. Additionally, with one exception, the connection pin (link plug 19) and connection pin socket (link socket 15) assignments correspond to those of the charger plug 17 and charging socket 11. The exception is that a connection pin of the link plug 19 forming part of the eighth cooperating mating feature corresponds with a neutral (N) pin of an AC CCS2 charger plug and a connection pin socket of the link socket 15 forming the other part of the eighth cooperating mating feature corresponds with a neutral (N) pin socket of an AC CCS2 socket.

In use and broadly speaking, the link plug 19 is plugged into the link socket 15 and the charger plug 17 is plugged into the charging socket 11 to facilitate charging of the traction battery 7 by the electrical charger 5. Control over the charging process is executed by the rechargeable energy store control system 9 and the charger control system 13 as facilitated by communication between them.

A DC power delivery circuit comprises:
∘ the positive DC supply terminal of the electrical charger 5;
∘ the third positive DC conductor 117;
∘ the third cooperating mating features;
∘ the second positive DC conductor 115;
∘ the positive DC pin 91;
∘ the positive DC pin socket 35;
∘ the first positive DC conductor 59;
∘ a positive DC switch selectively switchable between open and closed configurations by the rechargeable energy store control system 9;
∘ the positive terminal of the traction battery 7;
∘ the traction battery 7;
∘ the negative terminal of the traction battery 7;
∘ a negative DC switch selectively switchable between open and closed configurations by the rechargeable energy store control system 9;
∘ the first negative DC conductor 61;
∘ the negative DC pin socket 37;
∘ the negative DC pin 93;
∘ the second negative DC conductor 119;
∘ the fourth cooperating mating features;
∘ the third 121 negative DC conductor 121; and
∘ the negative DC supply terminal of the electrical charger 5.

The DC power delivery circuit is selectively completed (e.g. by closure of the positive and negative DC switches) under the control of the rechargeable energy store control system 9 and/or charger control system 13, to deliver DC charging current to the traction battery 7.

An earthing conduction path comprises:
∘ the grounding point on the car 1;
∘ the first PE conductor 63;
∘ the PE pin socket 39;
∘ the PE pin 95;
∘ the second PE conductor 123;
∘ the fifth cooperating mating features;
∘ the third PE conductor 125; and
∘ the grounding point on the electrical charger 5.

The earthing conduction path provides earthing for components requiring it as well as enhanced safety.

A first proximity sensing system arranged to establish engagement of the charger plug 17 with the charging socket 11 comprises:
∘ the rechargeable energy store control system 9;
∘ the PP input of the rechargeable energy store control system 9;
∘ the first PP line 65;
∘ the first resistor 67;
∘ the PP pin socket 41;
∘ the PP pin 97;
∘ and the second resistor 127.

The first proximity sensing system is used to detect a characteristic change in resistance (resulting from different resistance values of the first 67 and second 127 resistors) in dependence on whether or not the charger plug 17 and charging socket 11 are engaged (i.e. plugged in). The indication provided by the first proximity sensing system, as established by the rechargeable energy store control system 9, as to whether or not the charger plug 17 and charging socket 11 are engaged, is used by the rechargeable energy store control system 9 and charger control system 13 in controlling the connection and/or charging process.

A second proximity sensing system arranged to establish engagement of the link plug 19 with the link socket 15 comprises:
∘ the charger control system 13;
∘ the PP input of the charger control system 13;
∘ the second PP line 131;
∘ the fourth resistor 132;
∘ the sixth cooperating mating features;
∘ and the third resistor 129.

The second proximity sensing system is used to detect a characteristic change in resistance (resulting from different resistance values of the third 129 and fourth 132 resistors) in dependence on whether or not the link plug 19 and link socket 15 are engaged (i.e. plugged in). The indication provided by the second proximity sensing system, as established by the charger control system 13, as to whether or not the link plug 19 and link socket 15 are engaged, is used by the rechargeable energy store control system 9 and charger control system 13 in controlling the connection and/or charging process.

A control pilot line system comprises:
∘ the rechargeable energy store control system 9;
∘ the CP input of the rechargeable energy store control system 9;
∘ the first CP line 71;
∘ the CP pin socket 43;
∘ the CP pin 99;
∘ the second CP line 133;
∘ the seventh cooperating mating features;
∘ the third CP line 135;
∘ the CP input of the charger control system 13; and
∘ the charger control system 13.

The control pilot line system is rendered redundant in respect of the conventional part of its functionality that allows power line communication between the charger control system 13 and rechargeable energy store control system 9 for coordinating control of the charging power. It is not therefore used for such communications. In this embodiment, a base functionality is nonetheless retained, whereby the control pilot line system is used to enable or disable charging power delivery and as a safety system (i.e. if a break in the control pilot line system is determined then both the rechargeable energy store control system 9 and the charger control system 13 are alerted that they should initiate an emergency shutdown.

A state of charge indication system comprises:
∘ the charger control system 13;
∘ the LED driver terminal of the charger control system 13;
∘ the second LED conductor 139;
∘ the eighth cooperating mating features;
∘ the first LED conductor 137; and
∘ the LED 105.

The state of charge indication system operates by the charger control system 13 outputting a driving signal to power the LED 105 in an illumination pattern dependent on the state of charge of the traction battery 7. In this case, different illumination patterns are used to distinguish between charging states of "off", "ready for charge" and "charging" and the charger control system 13 outputs a suitable driving signal in accordance with which of these states is prevailing.

A first communication line comprises:
∘ the first communication interface of the rechargeable energy store control system 9;
∘ the first CAN_LO line 55;
∘ the first communication pin socket 31;
∘ the first communication pin 87;
∘ the second CAN_LO line 107;
∘ the first cooperating mating features;
∘ the third CAN_LO line 109; and
∘ the third communication interface of the charger control system 13.

A second communication line comprises:
∘ the second communication interface of the rechargeable energy store control system 9;
∘ the first CAN_HI line 57;
∘ the second communication pin socket 33;
∘ the second communication pin 89;
∘ the second CAN_HI line 111;
∘ the second cooperating mating features;
∘ the third CAN_HI line 113; and
∘ the fourth communication interface of the charger control system 13.

The first and second communication lines are used for CAN based communications between the rechargeable energy store control system 9 and the charger control system 13 in order to control the charging process. The following communication and control process is provided by way of example, but as will be appreciated, additions, omissions and/or variations on this are possible without altering the principal of utilising the first and second communication lines for controlling the charging process.

### Handshake phase

In an initial handshake phase, the rechargeable energy store control system 9 determines that the charger plug 17 and charging socket 11 have been engaged using the first proximity sensing system. In response, the rechargeable energy store control system 9 uses the first and second communication lines to periodically transmit a signal (first heartbeat) to the charger control system 13 indicating a status of the car 1 (at this time the status would be 'online'). In addition, the rechargeable energy store control system 9 transmits voltage and current limits to the charger control system 13.

The charger control system 13 determines that the link plug 19 and link socket 15 have been engaged using the second proximity sensing system and receives at least one instance of the heartbeat signal from the rechargeable energy store control system 9. In response, the charger control system 13 uses the first and second communication lines to periodically transmit a signal (second heartbeat) to the rechargeable energy store control system 9 indicating the status of the electrical charger 5 (at this time the status would be 'online').

In addition, the charger control system 13 transmits data concerning the capabilities of the electrical charger 5 to the rechargeable energy store control system 9.

The rechargeable energy store control system 9 receives the second heartbeat, determines that the electrical charger 5 capabilities are compatible with the car 1 (assuming that this is indeed the case) and controls a locking together of the charger plug 17 and charging socket 11.

When the locking is confirmed complete by the rechargeable energy store control system 9, it sets the vehicle status to 'ready' and this is notified to the charger control system 13 via the first heartbeat.

### Insulation check

In an insulation check phase, the rechargeable energy store control system 9 uses the first and second communication lines to request from the charger control system 13 that an insulation check is performed.

In response, the charger control system 13 performs an insulation check routine to check the connection safety. This is performed using an isolation monitoring device which checks for current flow from the DC circuit (positive and negative sides) to the grounding point on the car and/or to the earthing conduction path. If and when this check is completed and insulation safety is confirmed, the charger control system 13 adjusts the status of the electrical charger 5 to 'ready' and this is notified to the rechargeable energy store control system 9 via the second heartbeat.

### Pre-charge

In a pre-charge phase, the rechargeable energy store control system 9 uses the first and second communication lines to request pre-charge actions and to commence transmission of requested DC voltage level to the charger control system 13 in order to match that of the traction battery 7.

In response, the charger control system 13 ramps up the voltage delivered until the request is matched.

The rechargeable energy store control system 9 monitors the voltage being delivered via the DC power delivery circuit for the request being matched. When, the request is being matched within a predefined tolerance, the DC power delivery circuit is completed by closure of the positive and negative DC switches under the control of the rechargeable energy store control system 9. Consequently, DC charging current is delivered to the traction battery 7.

### Power delivery

The rechargeable energy store control system 9 uses the first and second communication lines to confirm positive and negative DC switches are closed. The rechargeable energy store control system 9 also adjusts the car 1 status to 'ready to charge', which is notified to the charger control system 13 via the first heartbeat.

Charging is performed, and the rechargeable energy store control system 9 uses the first and second communication lines to adjust the requested voltage and current as appropriate in dependence on the charging profile of the traction battery 7. The electrical charger 5 adjusts the voltage and current delivered accordingly.

As charging approaches completion, the requested current requested by the rechargeable energy store control system 9 via the first and second communication lines is ramped down. Once charging is determined complete by the rechargeable energy store control system 9, it requests 0V from the charger control system 13 via the first and second communication lines.

### Shutdown

In a shutdown phase, the rechargeable energy store control system 9 opens the positive and negative DC switches and sets its status to 'not ready to charge', which is notified to the charger control system 13 by the first heartbeat. The rechargeable energy store control system 9 then confirms that the DC output voltage from the electrical charger 5 is less than 60V in accordance with a current output voltage published by the charger control system 13 and provided to the rechargeable energy store control system 9 via the first and second communication lines. Where this is the case, the rechargeable energy store control system 9 controls an unlocking of the charger plug 17 and charging socket 11.

Throughout the process, the first 51 and second 53 temperature sensors are used by the rechargeable energy store control system 9 to monitor the temperatures of the positive DC pin socket 35 and the negative DC pin socket 37 respectively. If at any time at least one of these temperatures is outside of pre-defined tolerance, the rechargeable energy store control system 9 begins a shutdown process whereby requested current and voltage are ramped down and the shutdown process described above is followed.

It will be appreciated that various changes and modifications can be made to the present invention without departing from the scope of the present application.

## Claims

1. An electrical charger connector comprising a charger plug having connection pins comprising first and second communication pins, the first and second communication pins being arranged to cooperatively engage respective first and second communication pin sockets of a charging socket, to thereby create connections for the sending and/or receiving of at least one communication signal between a charger control system of an electrical charger and a rechargeable energy store control system of an electrically powered device,
where the first and second communication pin sockets correspond in position and form with respective alternating current, AC, pin sockets of a combined charging system, CCS, socket.

2. The electrical charger connector according to claim 1, where the connection pins comprise positive and negative direct current, DC, pins arranged to cooperatively engage respective positive and negative DC pin sockets of the charging socket, to thereby make connections for the transmission of DC current for charging a rechargeable energy store of the electrically powered device.

3. The electrical charger connector according to claim 1 or claim 2, where the connection pins comprise:
a protective earth, PE, pin;
a proximity pilot, PP, pin;
a control pilot, CP, pin; and
two further pins corresponding in position and form with respective AC pin sockets of the CCS socket.

4. The electrical charger connector according to claim 3 where the connection pins are arranged in position and form to correspond to a combination of those of DC and AC CCS plugs.

5. The electrical charger connector according to any preceding claim where the charger plug comprises an electrically powered state of charge indicator.

6. The electrical charger connector according to any preceding claim where the CCS socket is a CCS2 socket.

7. An electrical charger arranged for use with an electrical charger connector, where
the electrical charger connector comprises a charger plug having connection pins comprising first and second communication pins, the first and second communication pins being arranged to cooperatively engage respective first and second communication pin sockets of a charging socket, to thereby create connections for the sending and/or receiving of at least one communication signal between a charger control system of an electrical charger and a rechargeable energy store control system of an electrically powered device, where
the first and second communication pin sockets correspond in position and form with respective alternating current, AC, pin sockets of a combined charging system, CCS, socket, and
the electrical charger comprises the charger control system, which is arranged to send the at least one communication signal to and/or receive the at least one communication signal from the rechargeable energy store control system of the electrically powered device via the connections respectively made by the first and second communication pins with the first and second communication pin sockets.

8. The electrical charger of claim 7 arranged to deliver DC current to charge a rechargeable energy store of the electrically powered device via connections respectively made by positive and negative DC pins, which are connection pins of the charger plug, with positive and negative DC pin sockets of the charging socket.

9. The electrical charger of claim 7 or claim 8 arranged to deliver electrical power to a state of charge indicator of the charger plug under the control of the charger control system.

10. An electrical charger comprising the electrical charger connector of any of claims 1 to 6 and where
the electrical charger comprises the charger control system, which is arranged to send the at least one communication signal to and/or receive the at least one communication signal from the rechargeable energy store control system of the electrically powered device via the connections respectively made by the first and second communication pins with the first and second communication pin sockets.

11. An electrical charging connector comprising a charging socket having connection pin sockets comprising first and second communication pin sockets, the first and second communication pin sockets being arranged to cooperatively engage respective first and second communication pins of a charger plug, to thereby create connections for the sending and/or receiving of at least one communication signal between a charger control system of an electrical charger and a rechargeable energy store control system of an electrically powered device,
where the first and second communication pin sockets correspond in position and form with respective alternating current, AC, pin sockets of a combined charging system, CCS, socket.

12. The electrical charging connector according to claim 11, where the connection pin sockets comprise positive and negative direct current, DC, pin sockets arranged to cooperatively engage respective positive and negative DC pins of the charger plug, to thereby create connections for the transmission of DC current for charging a rechargeable energy store of the electrically powered device.

13. An electrically powered device comprising a rechargeable energy store, a rechargeable energy store control system and the electrical charging connector of claim 11 or 12.

14. The electrically powered device of claim 13 where the electrically powered device is a vehicle and the rechargeable energy store is a traction battery of the vehicle.

15. The electrically powered device of claim 14 where the vehicle comprises first and second communication interfaces arranged to form at least part of respective connections between the first and second communication pin sockets and the rechargeable energy store control system, where the first and second communication interfaces conform with the controller area network, CAN, vehicle bus standard.
